# EUROPÄISCHE PATENTSCHRIFT

(11) **EP 3 395 666 B1**
(45) Veröffentlichungstag und Bekanntmachung des Hinweises auf die Patenterteilung: **25.11.2020**
(21) Anmeldenummer: 18168359.0
(22) Anmeldetag: 20.04.2018
(51) Int. Cl.: B62M 6/55, B62M 6/50

(54) **SENSORANORDNUNG, BETRIEBSSTEUERVERFAHREN FÜR EINEN ANTRIEB, STEUEREINRICHTUNG UND FAHRZEUG**
SENSOR ASSEMBLY, OPERATION CONTROL METHOD FOR A DRIVE, CONTROL DEVICE AND VEHICLE
DISPOSITIF CAPTEUR, PROCÉDÉ DE COMMANDE DE FONCTIONNEMENT POUR UN ENTRAÎNEMENT, DISPOSITIF DE COMMANDE ET VÉHICULE

(30) Priorität: 24.04.2017 DE 102017206821
(43) Veröffentlichungstag der Anmeldung: 31.10.2018
(73) Patentinhaber: Robert Bosch GmbH, 70442 Stuttgart (DE)
(72) Erfinder: Ossmann, Christoph, 72768 Reutlingen (DE); Konnerth, Egon, 71364 Winnenden (DE)

(56) Entgegenhaltungen:
- EP-A1- 3 020 621
- EP-A2- 2 380 806
- DE-A1- 10 253 035
- DE-A1-102013 209 262
- US-A- 5 031 455
- US-A1- 2004 084 272
- US-A1- 2010 253 325

## Beschreibung

### Stand der Technik

Die vorliegende Erfindung betrifft eine Sensoranordnung für den Antrieb eines mit Muskelkraft und zusätzlich mit Motorkraft antreibbaren Fahrzeugs, insbesondere eines Elektrofahrrads, eBikes oder Pedelecs, ein Betriebssteuerverfahren für einen entsprechenden Antrieb, eine Steuereinrichtung für einen derartigen Antrieb sowie ein mit Muskelkraft und zusätzlich mit Motorkraft antreibbares Fahrzeug als solches, insbesondere ein Elektrofahrrad, eBike oder Pedelec.

Elektrische und/oder mit Muskelkraft betreibbare Fahrzeuge sind aus dem Stand der Technik in unterschiedlichen Ausgestaltungen bekannt. Hierbei gibt es beispielsweise Elektrofahrräder, bei denen der elektrische Antrieb im Bereich des Tretlagers angeordnet ist (Mittelmotorkonzept). Über ein Kettenblatt und eine Kette kann ein Hinterrad angetrieben werden. Der elektrische Antrieb ist dabei üblicherweise durch einen Freilauf vom Abtrieb entkoppelt. Hierbei ist es möglich, dass der elektrische Antrieb stoßartig in die Abtriebsseite eingekoppelt wird, wodurch es zu großen Kraft- und Drehmomentspitzen im Antriebsstrang kommen kann. Dies ist beispielsweise der Fall, wenn das Elektrofahrrad rollt und der Fahrer aus dem rollenden Zustand mit Muskelkraft zu pedalieren beginnt und der elektrische Antrieb zugeschaltet werden soll.

Durch den Einsatz von Drehmomentsensoren und durch das Erfassen der muskulär und/oder maschinell eingebrachten Drehmomente können derartige Kraft- und Drehmomentspitzen häufig, jedoch oft nicht in ausreichendem Maß vermieden werden. Insbesondere sind dabei Fälle im Bereich eines so genannten Nullsignals, bei denen die aufgebrachten Kräfte und/oder Drehmomente nahezu verschwinden, nur schwer handhabbar.

### Offenbarung der Erfindung

Die erfindungsgemäße Sensoranordnung mit den Merkmalen des Anspruches 1 weist demgegenüber den Vorteil auf, dass bei einem Antrieb eines mit Muskelkraft und zusätzlich mit Motorkraft antreibbaren Fahrzeugs auch Fälle mit nahezu verschwindendem muskulär aufgebrachtem Drehmoment zuverlässig handhabbar sind. Dies wird erfindungsgemäß mit den Merkmalen des Anspruches 1 dadurch erreicht, dass eine Sensoranordnung für den Antrieb eines mit Muskelkraft und zusätzlich mit Motorkraft antreibbaren Fahrzeugs und insbesondere eines Elektrofahrrads, eBikes oder Pedelecs, geschaffen wird, welches eingerichtet ist, eine Relativbewegung und/oder eine Relativposition eines ersten Koppelelements und eines zweiten Koppelelements eines Koppelmoduls zum Koppeln und Entkoppeln einer Antriebswelle und einer Abtriebswelle des Antriebs zueinander zu detektieren. Dadurch wird eine Bestimmung des Vorliegens oder Nichtvorliegens eines gekoppelten und/oder eines entkoppelten Zustands zwischen den ersten und zweiten Koppelelementen und damit zwischen der Antriebswelle und der Abtriebswelle des Antriebs möglich oder bewirkt.

Die Unteransprüche zeigen bevorzugte Weiterbildungen der Erfindung.

Die Detektion einer Relativbewegung und/oder einer Relativposition der ersten und zweiten Koppelelemente und somit des Vorliegens oder Nichtvorliegens eines gekoppelten und/oder eines entkoppelten Zustands zwischen Antriebswelle und Abtriebswelle können auf der Grundlage ganz unterschiedlicher Messprinzipien, die auch miteinander beliebig kombiniert werden können, erfolgen.

So ist die erfindungsgemäße Sensoranordnung dazu eingerichtet, eine Relativbewegung und/oder eine Relativposition der ersten und zweiten Koppelelemente zueinander auf der Grundlage und/oder durch Erfassen einer akustischen, optischen, elektrischen und/oder magnetischen Messgröße zu detektieren, welche von der Relativbewegung und/oder der Relativposition der ersten und zweiten Koppelelemente relativ zueinander und/oder des ersten Koppelelements relativ zu einer von Position und Bewegung des Koppelmoduls mechanisch entkoppelten Stelle am zu Grunde liegenden Fahrzeug abhängig ist.

Dabei kann sich die in Rede stehende Stelle am zu Grunde liegenden Fahrzeug, die von der Position und/oder der Bewegung des Koppelmoduls mechanisch entkoppelt ist, zum Beispiel an einem Drehmomentsensor oder dessen Gehäuse oder einem anderen Teil des Antriebs, eines Chassis oder eines Rahmens des zu Grunde liegenden Fahrzeugs befinden, welche mit der Antriebswelle und der Abtriebswelle bei deren Rotation nicht mit bewegt werden.

Die erfindungsgemäße Sensoranordnung ist eingerichtet mit einer Relativbewegung und/oder einer Relativposition des ersten und/oder des zweiten Koppelelements im Zusammenhang stehenden Schall, Geräusche, mechanische Schwingungen, Trägheitskräfte und/oder deren Wirkung zu detektieren. Das bedeutet zum Beispiel, dass es beim Einrücken und/oder beim Ausrücken der beiden Koppelelemente zueinander, nämlich beim Bewirken des Koppelns oder des Entkoppelns, durch Berührung der Koppelelemente miteinander oder mit anderen Elementen des Koppelmoduls, zum Beispiel einem Gehäuse, oder beim Lösen einer derartigen bereits bestehenden Berührung zu einem Geräusch kommt, welches detektierbar ist.

Zu diesem Zweck ist es von Vorteil, wenn bei einer Ausgestaltungsform der erfindungsgemäßen Sensoranordnung mindestens ein Mikrofon als erste Sensorkomponente ausgebildet ist, insbesondere mit einer Anordnung in unmittelbarer Nachbarschaft zum Koppelmodul, im oder am Koppelmodul.

Durch Anbringung der Sensoranordnung oder zumindest der ersten Sensorkomponente, insbesondere des Mikrofons, in entsprechender räumlicher Nähe zum Koppelmodul reduziert den störenden Einfluss durch Geräusche außerhalb des Koppelmoduls.

Alternativ oder zusätzlich kann die erfindungsgemäße Sensoranordnung dazu eingerichtet sein, mit einer Relativbewegung und/oder einer Relativposition (i) zwischen dem ersten Koppelelement und einer von Position und Bewegung des Koppelmoduls mechanisch entkoppelten Stelle am zu Grunde liegenden Fahrzeug oder (ii) zwischen den ersten und zweiten Koppelelementen im Zusammenhang stehende optische Eigenschaften und/oder Änderungen eines Lichtwegs zwischen dem ersten Koppelmodul und der Stelle am zu Grunde liegenden Fahrzeug bzw. zwischen den ersten und zweiten Koppelelementen zu detektieren.

Mit derartigen Maßnahmen können also mit optischen Mitteln die entsprechenden Relativpositionen und/oder Relativbewegungen detektiert werden. Dabei kann es sich um die Messung von Abständen, von Orientierungen zueinander und insbesondere von Rotationen handeln.

Insbesondere kann dadurch festgestellt werden, ob das erste Koppelelement, welches zum Beispiel mit der mit Muskelkraft beaufschlagbaren Antriebswelle drehfest verbunden ist, als solches rotiert und/oder ob die ersten und zweiten Koppelelemente relativ zueinander rotieren.

Für eine konkrete Realisierung der erfindungsgemäßen Sensoranordnung im Hinblick auf optische Messmittel kann diese mit einer Lichtschranke als erster Sensorkomponente ausgebildet sein, insbesondere (i) an einer von Position und Bewegung des Koppelmoduls mechanisch entkoppelten Stelle am zu Grunde liegenden Fahrzeug oder (ii) mitbeweglich mit dem zweiten Koppelelement.

Ferner kann die erfindungsgemäße Sensoranordnung mit einem Geberelement als zweiter Sensorkomponente und mitbeweglich mit dem ersten Koppelelement zur temporären Unterbrechung des Lichtwegs der Lichtschranke ausgebildet sein.

Denkbar ist insbesondere eine gabelförmig ausgestaltete Lichtschranke mit einem in Bezug auf die Rotation der Antriebswelle und/oder Abtriebswelle und entsprechend der beiden Koppelelemente des Koppelmoduls ruhenden Träger, welche mit Unterbrechung von deren Lichtweg durchlaufen werden kann vom Geberelement, welches am ersten Koppelelement des Koppelmoduls oder an dessen mitumlaufenden Gehäuse angebracht ist und bei Rotation den Lichtweg der Lichtschranke durchkreuzt und damit temporär unterbricht.

Auch können modulierbar elektrische und/oder magnetische Eigenschaften und Parameter und deren Variation ausgenutzt werden, um auf der Grundlage von deren Abhängigkeit von einer Relativposition und/oder Relativbewegung des ersten Koppelelements und/oder des zweiten Koppelelements das Vorliegen oder Nichtvorliegen eines gekoppelten und/oder eines entkoppelten Zustands der Koppelelemente und insbesondere der Antriebswelle mit der Abtriebswelle zu detektieren.

So ist eine andere vorteilhafte Weiterbildung der erfindungsgemäßen Sensoranordnung dazu eingerichtet, mit einer Relativbewegung und/oder einer Relativposition (i) zwischen dem ersten Koppelelement und einer von Position und Bewegung des Koppelmoduls mechanisch entkoppelten Stelle am zu Grunde liegenden Fahrzeug oder (ii) zwischen den ersten und zweiten Koppelelementen im Zusammenhang stehende magnetische Eigenschaften und/oder Änderungen in einem Weg oder Raumbereich zwischen dem ersten Koppelmodul und der Stelle am zu Grunde liegenden Fahrzeug bzw. zwischen den ersten und zweiten Koppelelementen zu detektieren.

Wie im optischen Fall, so können auch bei der Detektion magnetischer Eigenschaften und von deren Änderungen räumliche Abstände und/oder Orientierungen des ersten und/oder des zweiten Koppelelements, insbesondere in Relation zu einer Stelle, die von der Bewegung der Koppelelemente und insbesondere der Antriebswelle und der Abtriebswelle hinsichtlich von deren Rotation isoliert ist, ermittelt werden, um das Vorliegen oder Nichtvorliegen eines gekoppelten und/oder entkoppelten Zustands der Koppelelemente und entsprechend der Antriebswelle und der Abtriebswelle zu detektieren.

Bei einer bevorzugten Ausführungsform der erfindungsgemäßen Sensoranordnung ist diese ausgebildet mit einem Magnetsensor als erster Sensorkomponente, insbesondere (i) an einer von Position und Bewegung des Koppelmoduls mechanisch entkoppelten Stelle am zu Grunde liegenden Fahrzeug oder (ii) mitbeweglich mit dem zweiten Koppelelement, und/oder mit einem Geberelement, insbesondere einem Magneten, als zweiter Sensorkomponente mitbeweglich mit dem ersten Koppelelement zur magnetischen Beeinflussung des Magnetsensors.

Wie im optischen Fall, so kann auch im Zusammenhang mit einer Detektion magnetischer Parameter und deren Änderungen eine der Sensorkomponenten, zum Beispiel das Geberelement im Sinne eines Magneten, mit dem ersten Koppelelement mitbeweglich ausgebildet sein, zum Beispiel am ersten Koppelelement selbst oder an einem mit dem ersten Koppelelement mitbewegten Gehäuse des Koppelmoduls.

Die andere Sensorkomponente kann von der Bewegung des Koppelmoduls und insbesondere der ersten und zweiten Koppelelemente hinsichtlich der Rotation entkoppelt an einer Stelle eines Drehmomentensensors, eines Gehäuses, eines Chassis oder eines Rahmens des Fahrzeugs angeordnet sein.

Die vorliegende Erfindung betrifft des Weiteren ein Betriebssteuerverfahren für den Antrieb eines mit Muskelkraft und zusätzlich mit Motorkraft antreibbaren Fahrzeugs, insbesondere eines Elektrofahrrads, eBikes oder Pedelecs, bei welchem
- eine mit Muskelkraft antreibbare Antriebswelle und eine maschinell antreibbare Abtriebswelle über ein Koppelmodul miteinander steuerbar koppelbar und entkoppelbar sind, um überlagernd Antriebsmomente auf die Abtriebswelle zu übertragen,
- zum Koppeln und Entkoppeln der Antriebswelle und der Abtriebswelle ein drehfest mit der Antriebswelle verbundenes erstes Koppelelement des Koppelmoduls und ein drehfest mit der Abtriebswelle verbundenes zweites Koppelelement des Koppelmoduls über eine Relativbewegung zueinander miteinander in bzw. außer Eingriff bringbar sind,
- eine Relativbewegung und/oder eine Relativposition der ersten und zweiten Koppelelemente zueinander zur Bestimmung des Vorliegens oder Nichtvorliegens eines gekoppelten und/oder eines entkoppelten Zustands zwischen den ersten und zweiten Koppelelementen detektiert werden und
- ein maschineller Antrieb in Abhängigkeit von der Detektion an die Abtriebswelle gekoppelt oder von dieser entkoppelt wird.

Bei dem erfindungsgemäßen Betriebssteuerverfahren werden eine Relativbewegung und/oder eine Relativposition der ersten und zweiten Koppelelemente zueinander auf der Grundlage eines Werts einer akustischen, optischen, elektrischen und/oder magnetischen Messgröße detektiert, welche von der Relativbewegung und/oder der Relativposition der ersten und zweiten Koppelelemente zueinander abhängig sind.

Es ist von besonderem Vorteil, dass bei dem erfindungsgemäßen Betriebssteuerverfahren eine Sensoranordnung verwendet wird, welche gemäß der vorliegenden Erfindung ausgestaltet ist.

Gemäß einem anderen Aspekt der vorliegenden Erfindung wird eine Steuereinrichtung für den Antrieb eines mit Muskelkraft und zusätzlich mit Motorkraft antreibbaren Fahrzeugs und insbesondere eines Elektrofahrrads, eBikes oder Pedelecs, vorgeschlagen, welche eingerichtet ist, ein Betriebssteuerverfahren gemäß der vorliegenden Erfindung auszuführen, Alternativ oder zusätzlich kann die erfindungsgemäße Steuereinrichtung eine Sensoranordnung gemäß der vorliegenden Erfindung und/oder eine Kommunikationsverbindung mit einer Sensoranordnung gemäß der vorliegenden Erfindung aufweisen.

Schließlich wird durch die vorliegende Erfindung auch ein mit Muskelkraft und zusätzlich mit Motorkraft antreibbares Fahrzeugs insbesondere ein Elektrofahrrad, eBike oder Pedelec definiert.

Das erfindungsgemäße Fahrzeug ist ausgebildet mit einem Antrieb, mit mindestens einem mit dem Antrieb antreibbaren Rad, mit einer Steuereinrichtung zur Steuerung des Antriebs, welche insbesondere auf der Grundlage der vorliegenden Erfindung ausgestaltet ist, sowie mit einer Sensoranordnung gemäß der vorliegenden Erfindung.

### Kurzbeschreibung der Figuren

Unter Bezugnahme auf die beigefügten Figuren werden Ausführungsformen der Erfindung im Detail beschrieben.
- Figur 1: ist eine schematische Darstellung für ein Beispiel eines Fahrzeugs nach Art eines Elektrofahrrads, bei welchem eine erste Ausführungsform der Erfindung realisiert ist.
- Figuren 2 bis 5: zeigen schematische und teilweise geschnittene Seitenansichten bevorzugter Ausgestaltungsformen des erfindungsgemäßen Antriebs unter Verwendung von Ausführungsformen der erfindungsgemäßen Sensoranordnung.

### Bevorzugte Ausführungsformen der Erfindung

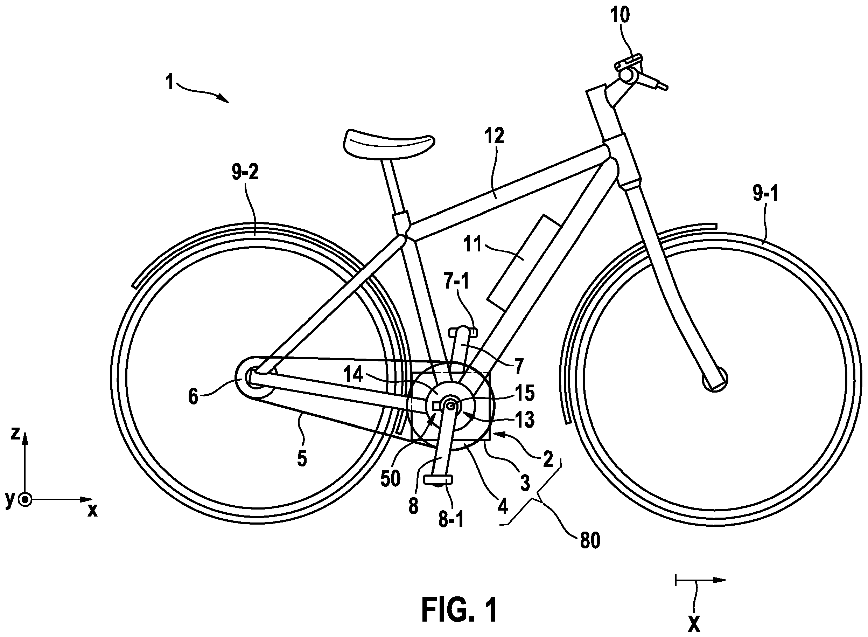

Nachfolgend werden unter Bezugnahme auf die Figuren 1 bis 5 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 als muskulärer Antrieb 2' mit zwei Kurbeln 7, 8 mit Pedalen 7-1 und 8-1 angeordnet sind. Ein elektrischer Antrieb 3 ist als maschineller Antrieb 3' in den Kurbeltrieb 2 integriert und dazu ausgebildet, mit einer Abtriebswelle 16 steuerbar koppelbar zu sein. Am Hinterrad 9-2 ist eine Gangschaltung 6 angeordnet.

Ein Antriebsmoment, welches durch den Fahrer und/oder durch den elektrischen Antrieb 3 bereitgestellt wird, wird von einem Kettenblatt als Abtriebselement 4 am Kurbeltrieb 2 über eine Kette 5 auf ein Ritzel der Gangschaltung 6 übertragen. Das Abtriebselement 4 ist drehfest mit der Abtriebswelle 16 verbunden.

Am Lenker des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Im Bereich des Kurbelgehäuses 14 ist des Weiteren eine Ausführungsform der erfindungsgemäßen Sensoranordnung 50 ausgebildet. Diese dient erfindungsgemäß der Plausibilisierung eines erfassten Antriebszustands des Antriebs 80 und insbesondere der Detektion des Vorliegens oder Nichtvorliegens eines gekoppelten und/oder eines entkoppelten Zustands der Antriebswelle 15 und der Abtriebswelle 16 bzw. damit in Zusammenhang stehender erster und zweiter Koppelelemente 21 und 22 eines zu Grunde liegenden Koppelmoduls 20, durch welche ein Entkoppeln der Antriebswelle 15 und der Abtriebswelle 16 vermittelt wird.

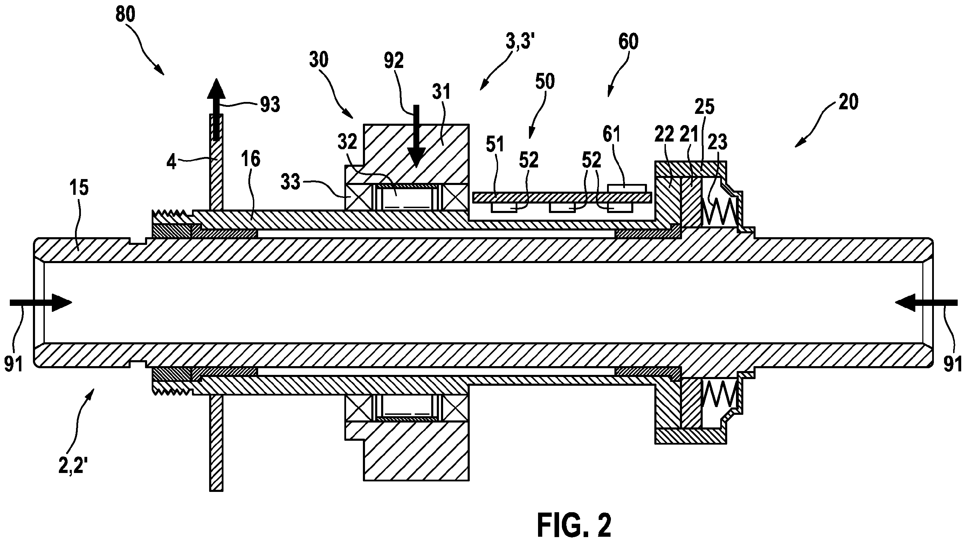

Die Figuren 2 bis 5 zeigen schematische und teilweise geschnittene Seitenansichten bevorzugter Ausgestaltungsformen des erfindungsgemäßen Antriebs 80 unter Verwendung von Ausführungsformen der erfindungsgemäßen Sensoranordnung 50.

Zunächst werden unter gemeinsamer Bezugnahme auf die Figuren 2 bis 5 diejenigen Aspekte des Antriebs 80 gemäß der vorliegenden Erfindung beschrieben, welche auch für sämtliche Ausführungsformen der Figuren 2 bis 5 relevant sind.

Der erfindungsgemäße Antrieb 80 weist dem Kern nach einen Kurbeltrieb 2 für den muskulären Antrieb 2' und einen Motor 3 für den maschinellen oder elektrischen Antrieb 3' auf.

Der muskulärer Antrieb 2' mit dem Kurbeltrieb 2 ist mit einer Kurbelwelle als Antriebswelle 15 ausgebildet, welche über ein Koppelmodul 20 mit einer Abtriebswelle 16 in Form einer Drehmomenthülse mechanisch koppelbar ist, um ein auf die Antriebswelle 15 aufgebrachtes Antriebsmoment an die Abtriebswelle 16 und das damit drehfest verbundene Abtriebselements 4, zum Beispiel in Form eines Kettenblatts, zu übertragen.

Zur Kopplung weist das Koppelmodul 20 ein erstes Koppelelement 21 auf, welches drehfest mit der Antriebswelle 15, nicht der Kurbelwelle, verbunden ist. Des Weiteren weist das Koppelmodul 20 ein zweites Koppelelement 22 auf, welches drehfest mit der Abtriebswelle 16, nämlich der Drehmomenthülse verbunden ist. Umschlossen werden die Koppelelemente 21 und 22 von einem Gehäuse 25, welches ebenfalls drehfest verbunden ist mit der Antriebswelle 15.

Die Antriebswelle 15 und die Abtriebswelle 16 sind koaxial zueinander ausgebildet, wobei die Drehmomenthülse als Abtriebswelle 16 einen Teil der Kurbelwelle als Antriebswelle 15 umschließt und an dieser über ein Lager 16-1 drehbar gelagert ist.

Innerhalb des Gehäuses 25 des Koppelmoduls 20 ist das erste Koppelelement 21 axial verschieblich ausgebildet und mittels einer Feder 23 mit einer von der Feder 23 abgewandten Stirnfläche gegen eine der Feder 23 zugewandte Stirnfläche des zweiten Koppelelement 22 vorgespannt.

Zum Beispiel können die ersten und zweiten Koppelelemente 21 und 22 als Stirnräder mit Stirn- oder Hirthverzahnungen ausgebildet sein, welche im gekoppelten Zustand, welcher in den Figuren 2 bis 4 gezeigt ist, miteinander eingreifen oder kämmen und welche im entkoppelten Zustand, bei welchem das erste Koppelelement 21 entgegen der Kraft der Feder 23 in den Figuren 2 bis 5 nach rechts verschoben ist, außer Eingriff sind und nicht miteinander kämmen.

Dargestellt ist des Weiteren eine erfindungsgemäß ausgestaltete Sensoranordnung 50. Diese Sensoranordnung ist neben der erfindungsgemäßen Ausgestaltung auch dazu ausgebildet, das auf die Abtriebswelle 16 wirkende gesamte Drehmoment zu ermitteln. Dies geschieht über eine Mehrzahl von Magnetsensoren 52, zum Beispiel in Form von Hallsensoren, welche durch die mechanischen Deformationen auf Grund der aufgebrachten Drehmomente an der Oberfläche der als Torsionshülse ausgebildeten Abtriebswelle 16 erzeugte Magnetfeldänderungen detektieren. Die Hallsensoren 52 sind auf der Unterseite eines Trägers 51 montiert, welche der Oberfläche der Abtriebswelle 16 zugewandt ist.

Das muskuläre Antriebsmoment 91 wird der Kurbelwelle als Antriebswelle 15 über die in Figur 1 dargestellten Kurbel 7 und 8 mit den Pedalen 7-1 und 8-1 zugeführt. Erfolgt kein Pedalieren, so geraten auf Grund der entsprechenden Ausgestaltung der Hirthverzahnungen der ersten und zweiten Koppelelemente 21 und 22 oder auf Grund anderer Maßnahmen die ersten und zweiten Koppelelemente 21 und 22 außer Eingriff, indem sich das erste Koppelelement 21 entgegen der Kraft der Feder 23 in den Figuren 2 bis 5 axial nach rechts bewegt und sich dadurch mit seiner von der Feder 23 abgewandten Stirnfläche von der der Feder 23 zugewandte Stirnfläche des zweiten Koppelelements 22 entfernt. In einem derart entkoppelten Zustand sind die Antriebswelle 15 und die Abtriebswelle 16 gegeneinander rotierbar.

Das vom Motor 3 des maschinellen Antriebs 3' erzeugte maschinelle Antriebsmoment 92 wird über ein Getriebe 30 mit Stirnrad 31, welches über einen steuerbaren Freilauf 32 mit der Abtriebswelle 16 steuerbar koppelbar ist, auf die Abtriebswelle 16 übertragen. Das Stirnrad 31 des Getriebes 30 und die Abtriebswelle 16 sind gegeneinander über ein Lager 33 drehbar gelagert.

Erfindungsgemäß ist bei den Ausführungsformen gemäß den Figuren 2 bis 5 die Sensoranordnung 50 modifiziert, indem dort zusätzliche Messeinheiten 60, 70, 80 mit zusätzlichen Sensorkomponenten 61, 71, 72, 81, 82 ausgebildet sind. Diese sind eingerichtet, eine relative Position und/oder Orientierung der ersten und zweiten Koppelelemente 21 bzw. 22 zueinander und/oder eine relative Position und/oder Orientierung des ersten Koppelelements 21 in Beziehung zu einer Stelle zu detektieren, die von einer Bewegung und insbesondere einer Rotation der ersten und zweiten Koppelelemente 21, 22 und insbesondere der Antriebswelle 15 und der Abtriebswelle 16 entkoppelt ist, zum Beispiel einer Stelle im Zusammenhang mit dem Chassis oder Rahmen 12, dem Kurbelgehäuse 14 und/oder dem Träger 51 der Sensoranordnung 50.

Bei der konkreten Ausgestaltungsform gemäß Figur 2 weist die Sensoranordnung 50 erfindungsgemäß eine akustische Messeinheit 60 auf, bei welcher als erste Sensorkomponente 61 ein Mikrofon ausgebildet ist, und zwar auf der Oberseite des Trägers 51 der Sensoranordnung 50 und von der Bewegung und/oder Rotation der ersten und zweiten Koppelelemente 21 und 22 des Koppelmoduls 20 entkoppelt. Ferner ist das Mikrofon 61 derart in der Nähe des Koppelmoduls 20 ausgebildet, dass Schall, Geräusche und/oder Trägheitskräfte, die bei der Bewegung des ersten Koppelmoduls 21 im Gehäuse 25 entstehen, akustisch erfasst werden können. Auf diese Weise kann insbesondere der Vorgang des Entkoppelns der ersten und zweiten Koppelelemente 41 und 22 voneinander und somit das Entkoppeln der Antriebswelle 15 von der Abtriebswelle 16 detektiert werden.

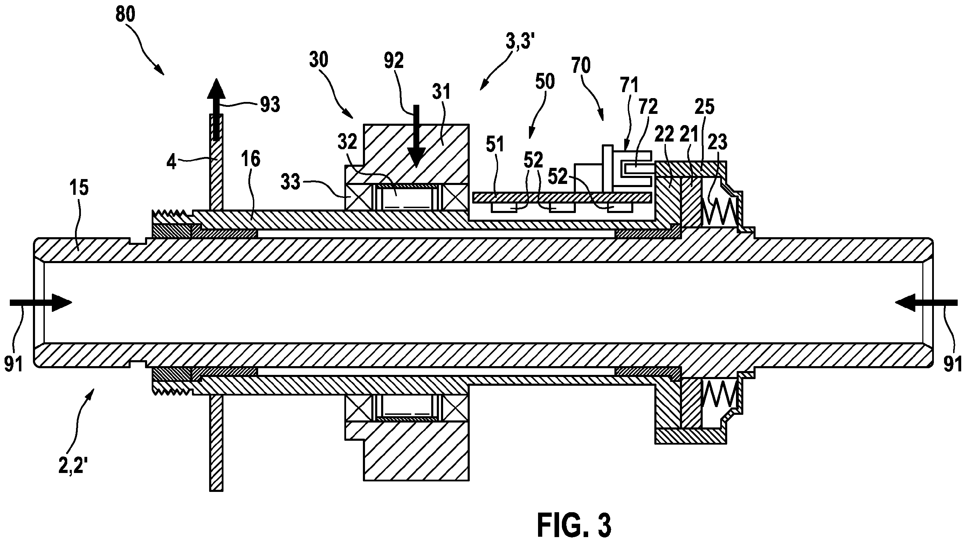

Bei der Ausgestaltungsform gemäß Figur 3 ist an der Oberseite des Trägers 51 der erfindungsgemäßen Sensoranordnung 50 eine optische Messeinheit 70 ausgebildet, und zwar mit einer ersten Sensorkomponente 71 in Form einer gabelförmig ausgestalteten Lichtschranke 71 mit Lichtquelle, Lichtpfad und Lichtsensor, welche entweder in Reflexion oder in Transmission betreibbar sind, und mit einer zweiten Sensorkomponente 72, nach Art eines schattenbildenden Geberelements, im Bereich des Gehäuses 25, welches drehfest mit der Antriebswelle 15, nämlich der Kurbelwelle, verbunden ist und sich beim Pedalieren mitdreht, wodurch sich auch das Geberelement 72 mitdreht und den Lichtweg der Lichtschranke 71 zyklisch durchläuft. Mit diesen Maßnahmen kann das Vorliegen oder Nichtvorliegen einer relativen Drehung der ersten und zweiten Koppelelemente 21 und 22 und mithin zwischen der Antriebswelle 15 und der Abtriebswelle 16 detektiert werden, um so den gekoppelten oder entkoppelten Zustand festzustellen.

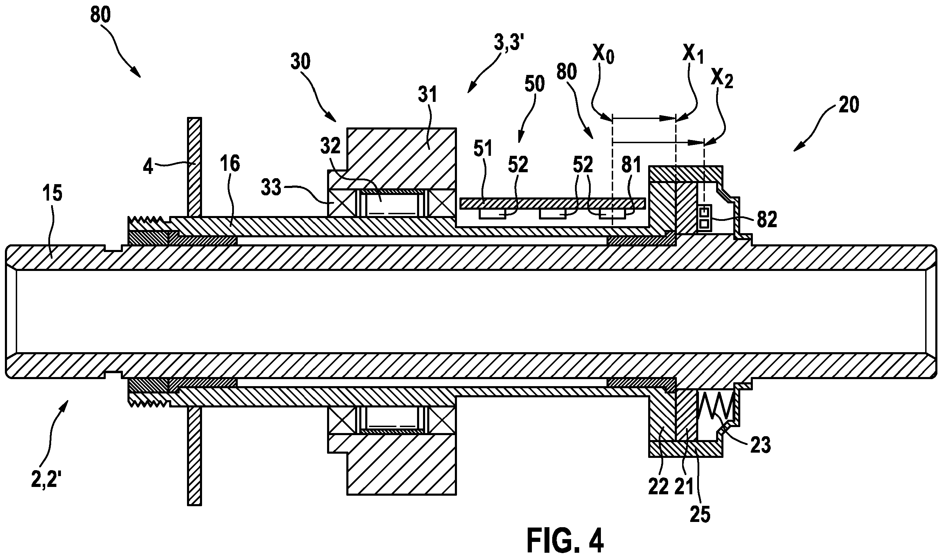

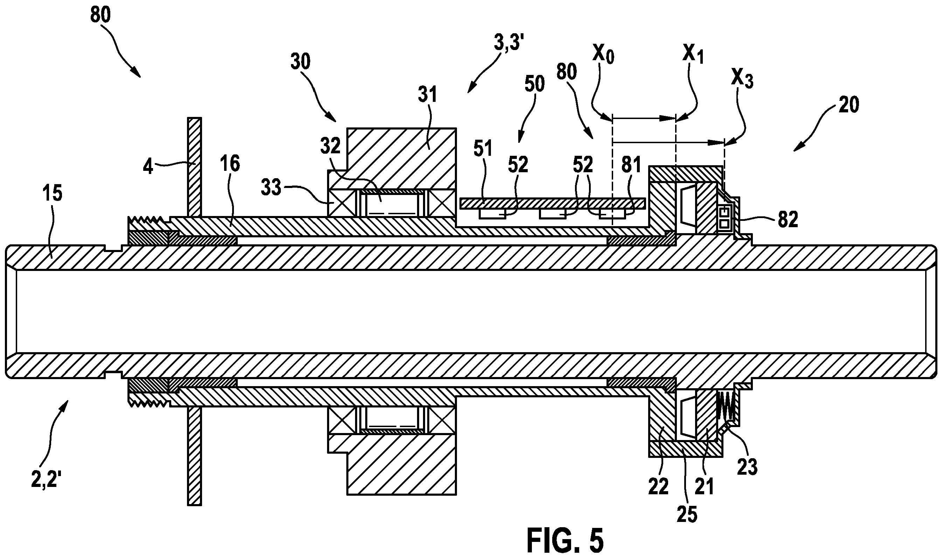

Bei der Ausführungsform gemäß den Figuren 4 und 5 wird einer der Hallsensoren 52 der erfindungsgemäßen Sensoranordnung 50, welcher auch zur Erfassung des Drehmoments auf der als Torsionshülse ausgestalteten Abtriebswelle 16 ausgebildet ist, als erste Sensorkomponente 81, nämlich als Magnetsensor, einer magnetischen Messeinheit 80 verwendet.

Bei der Ausführungsform gemäß den Figuren 4 und 5 befindet sich die erste Sensor Komponente 81 der magnetischen Messeinheit 80 somit an einer Stelle am Fahrzeug, welche von den Bewegungen und insbesondere von der Rotation der ersten und zweiten Koppelelemente 21 und 22 des Koppelmoduls 20 und somit von der entsprechenden Rotation der Antriebswelle 15 und der Abtriebswelle 16 entkoppelt ist.

Als zweite Sensorkomponente 82 der magnetischen Messeinheit 80 ist im Bereich des ersten Koppelelements 21 des Koppelmoduls ein Geberelement in Form eines Magnet oder magnetischen Bereichs ausgebildet. Aufgrund der axialen Verschiebung des ersten Koppelelements 21 gegenüber dem zweiten Koppelelement 22 des Koppelmoduls 20 beim Übergang zwischen den gekoppelten und entkoppelten Zustand erfolgt die Verschiebung des Geberelements 82 von der Position X2 im gekoppelten Zustand gemäß Figur 4 zur Position X3 im entkoppelten Zustand gemäß Figur 5, wobei die erste Sensorkomponente 81 in Form des Magnetsensors 52 der Sensoranordnung 50 am mechanisch entkoppelten Ort X0 verbleibt.

Diese Ortsverschiebung des Geberelements als zweite Sensorkomponente 82 der magnetischen Messeinheit 80 liefert eine messbare Veränderung der magnetischen Feldverteilung, welche durch die erste Sensorkomponente 81, nämlich durch den Magnetsensor 52 erfassbar ist. Auf diese Weise lässt sich aus der veränderten Feldgeometrie auf das Vorliegen oder Nichtvorliegen eines gekoppelten und/oder entkoppelten Zustands der ersten und zweiten Koppelelemente 21 und 22 und folglich der Antriebswelle 15 im Verhältnis zur Abtriebswelle 16 ermitteln.

Diese und weitere Merkmale und Eigenschaften der vorliegenden Erfindung werden an Hand der folgenden Darlegungen weiter erläutert:
Zur Regelung eines eBike-Motors 3 wird häufig ein Drehmomentsensor 50, 52 eingesetzt. Dieser wird dazu verwendet, eine intuitive Unterstützung abhängig von der durch den Fahrer aufgebrachten Kraft und/oder abhängig vom aufgebrachten Fahrraddrehmoment zu bewirken.

Für die Verwendung des Drehmomentsignals als Steuersignal oder Fahrsignal sind besonders der Wert und/oder die Genauigkeit bei einem aufgebrachten Fahrraddrehmoment im Bereich von 0 Nm entscheidend, weil in diesem Bereich über die Zu- und/oder Abschaltung des unterstützenden Motors 3 entschieden wird.

Einige Sensorsysteme 52 sind auf Grund bestimmter Einflüsse während eines Betriebs mit einer Betriebsbedingung im Nullsignal fehleranfällig. Dies betrifft den so genannten Offset und/oder die Offsetmodulation.

Der Fehler, der sich als Offset und/oder als Offset Modulation auf das Drehmomentsignal auswirkt, soll durch die vorliegende Erfindung plausibilisiert werden, um sicherzustellen, dass der unterstützende Motor 3 entsprechend der Fahrsituation innerhalb der geforderten Zeitspanne ein- oder ausgeschaltet wird.

Ein Kernaspekt der vorliegenden Erfindung besteht darin, ein zusätzliches Sensorsystem oder Messsystem, nämlich in Form einer zusätzlichen akustischen, optischen und/oder magnetischen Messeinheit 60, 70, 80, zu verwenden und/oder auszubilden, um das Anliegen oder Nichtanliegen eines Fahrraddrehmoments, insbesondere innerhalb bestimmter Grenzen, zu verifizieren.

### Variante (1)

Ein Aspekt der vorliegenden Erfindung besteht bei der Variante (1) in der Verwendung eines zusätzlichen und hier akustischen Sensorsystems 60, um dadurch ein erstes Kraftkopplungselement oder Koppelelement 21 eines Koppelmoduls 20, insbesondere im Verhältnis zu einem zweiten Koppelelement 22, zu überwachen und damit das Anliegen oder Nichtanliegen eines Fahrraddrehmoments und so das Vorliegen oder Nichtvorliegen eines Drehmomentsignals zu plausibilisieren.

Die Erfindung umfasst bei dieser Ausgestaltungsform die Messung des vom ersten Koppelelement 21 abgegebenen Schalls, der beim Koppeln und/oder beim Entkoppeln entsteht, um so die Unterscheidung eines gekoppelten Zustands von einem entkoppelten Zustand mit besonders hoher Genauigkeit treffen zu können.

Der erfindungsgemäß vorgeschlagene Messvorgang hat damit eine andere Messdomäne als der eingesetzte Drehmomentsensor im Sinne einer Anordnung von Magnetsensoren 52, das bedeutet, es werden andere Messprozesse und physikalische Größen zu Grunde gelegt als bei der wertgenauen Bestimmung des aufgebrachten Drehmoments.

### Variante (2)

Ein Aspekt der vorliegenden Erfindung besteht bei der Variante (2) in der Verwendung eines zusätzlichen und hier optischen Sensorsystems 70, um dadurch das erste Koppelelement 21 zu überwachen und damit das Anliegen oder Nichtanliegen eines Fahrraddrehmoments und so das Vorliegen oder Nichtvorliegen eines Drehmomentsignals zu plausibilisieren.

Die Erfindung umfasst bei dieser Ausgestaltungsform zum Beispiel die Messung einer Drehzahlunterscheidung im Zusammenhang mit dem ersten Koppelelement 21, welche beim Koppeln und/oder beim Entkoppeln entsteht, um so die Unterscheidung eines gekoppelten Zustands von einem entkoppelten Zustand mit besonders hoher Genauigkeit treffen zu können.

Auch hier liegt im Zusammenhang mit der Plausibilisierung eine andere Messdomäne vor, und zwar verglichen mit der wertgetreuen Bestimmung des aufgebrachten Drehmoments mittels ein oder mehrerer Magnetsensoren 52.

### Variante (3)

Ein Aspekt der vorliegenden Erfindung besteht bei der Variante (3) in der Verwendung eines zusätzlichen und hier magnetischen Sensorsystems 80, um dadurch das erste Koppelelement 21 zu überwachen und damit das Anliegen oder Nichtanliegen eines Fahrraddrehmoments und so das Vorliegen oder Nichtvorliegen eines Drehmomentsignals zu plausibilisieren.

Es geht bei dieser Variante (3) insbesondere um den Einsatz eines zusätzlichen magnetisches Bauteils 82 im Sinne eines Geberelements, welches die Bewegung - zum Beispiel axial und/oder radial - des ersten Koppelelements 21 erfährt und durch dessen Positionsänderung, insbesondere im Sinne einer relativen Bewegung zum Drehmomentsensor im Sinne eines Magnetsensors 82, das vorhandene Drehmomentsignal beeinflusst.

Ein Vorteil aus dieser zusätzlichen definierten Modulation besteht darin, dass eine weitere Information in das Drehmomentsignal zum Beispiel der ohnehin vorhandenen Magnetsensoren 52 eingeprägt werden kann, wodurch das Drehmomentsignal eine Charakteristik erhält, welche eine klare Erkennung des Zustands als gekoppelter oder als entkoppelter Kraftfluss ermöglicht.

### Details zu den Varianten (1) bis (3)

Bei einer Ausführungsform der Variante (1) kann der betrachtete Drehmomentsensor als erfindungsgemäße Sensoranordnung 50 ein Sensor basierend auf den magnetostriktiven Effekt sein. Dieser ist dann in der magnetischen Domäne beeinflussbar. Das dabei verwendbare Kopplungsglied oder Koppelelement 20 verbindet den muskulären Antrieb 2' durch den Fahrer mit einem maschinell erzeugten Antrieb 3' mit Summierung der Drehmomente und mit der Abtriebsseite, nämlich der Abtriebswelle 16 und insbesondere mit dem Abtriebselement 4.

Findet eine Kraftkopplung zwischen dem muskulären Antrieb 2' und dem maschinell erzeugten Antrieb 3' statt, so stehen die Koppelelemente 21 und 22 in Eingriff miteinander und es erfolgt keine Relativbewegung zwischen den Koppelelementen 21 und 22 des Koppelmoduls 20.

Wird die Kraftkopplung zwischen den Koppelelementen 21 und 22 durch Stoppen des muskulären Antriebes 2' unterbrochen, so kommt es zu einer Relativbewegung der Koppelelemente 21 und 22, bei welcher ein charakteristisches Geräusch entsteht und emittiert wird.

Durch das Vorsehen und Verwenden eines akustischen Messsystems 60 mit einem Mikrofon oder dergleichen als erster Sensorkomponente 61 kann dieses charakteristische Geräusch erfasst und damit die Entkopplung festgestellt werden.

Bei einer Ausführungsform der Variante (2) kann der betrachtete Drehmomentsensor im Sinne der erfindungsgemäßen Sensoranordnung 50 als ein Sensor basierend auf dem magnetostriktiven Effekt ausgebildet sein. In diesem Fall ist der Sensor in der magnetischen Domäne beeinflussbar. Das dabei verwendbare erste Koppelelement 21 verbindet den muskulären Antrieb 2' mit einem maschinell erzeugten Antrieb 3' mit Summierung und mit der Abtriebsseite, nämlich der Abtriebswelle 16 und dem Abtriebselement 4.

In den mechanischen Aufbau wird auf der mit dem muskulären Antrieb 2' fest gekoppelten Seite des Koppelmoduls 20 ein mechanisches Geberelement als zweite Sensorkomponente 72 integriert. Dieses wird zur Kostenreduktion mit einem vorhandenen Gehäuse 25 des Koppelmoduls 20 umgesetzt. Damit findet eine Rotation des Geberelements 72 nur statt, wenn eine Drehung auf der Seite des muskulären Antriebs 2' und der Antriebswelle 15 eingeleitet wird.

Findet eine Entkopplung statt, erfolgt keine Rotation am Geberelement 72. Dies ermöglicht eine Erkennung und Reaktion innerhalb der geforderten Zeit.

Bei einer Ausführungsform der Variante (3) kann der betrachtete Drehmomentsensor im Sinne der erfindungsgemäßen Sensoranordnung 50 als ein Sensor basierend auf dem magnetostriktiven Effekt ausgebildet sein. In diesem Fall ist der verwendete Sensor ebenfalls in der magnetischen Domäne beeinflussbar.

In den mechanischen Aufbau wird auf der axial beweglichen Seite des Koppelmoduls 20, also am ersten Koppelelement 21 ein axiale Magnetisierung nach Art eines Geberelements als zweite Sensorkomponente 82 eingebracht. Dabei kann das erste Koppelmodul 21 selbst oder ein zusätzlich eingebrachtes Bauteil diese Magnetisierung repräsentieren. Wird das mechanische Bauteil des ersten Koppelelements 21 auf Grund von der Entkopplungsaktivierung ausgerückt, zum Beispiel in axialer Weise, wie dies in Figur 4 und 5 dargestellt ist, entsteht eine größere Entfernung X0 zwischen dem Sensorelement 52 als erster Sensorkomponente 81 und der eingebrachten Magnetisierung 82. Dies führt im Sensorelement 81 zu einem Offsetversatz und/oder zu einer Offsetmodulation. Diese Signalcharakteristik wird genutzt, um den Status mit einem gekoppelten bzw. einem entkoppelten Kraftfluss sicher zu detektieren.

## Patentansprüche

1. Sensoranordnung (50) für den Antrieb (80) eines mit Muskelkraft und zusätzlich mit Motorkraft antreibbaren Fahrzeugs (1), insbesondere eines Elektrofahrrads, eBikes oder Pedelecs, welche eingerichtet ist,
- eine Relativbewegung und/oder eine Relativposition eines ersten Koppelelements (21) und eines zweiten Koppelelements (22) eines Koppelmoduls (20) zum Koppeln und Entkoppeln einer Antriebswelle (15) und einer Abtriebswelle (16) des Antriebs (80) zueinander zu detektieren,
- um dadurch eine Bestimmung des Vorliegens oder Nichtvorliegens eines gekoppelten und/oder eines entkoppelten Zustands zwischen den ersten und zweiten Koppelelementen (21, 22) und damit der Antriebswelle (15) und der Abtriebswelle (60) des Antriebs (80) zu bewirken,
wobei die Sensoranordnung (50)
eingerichtet ist, mit der Relativbewegung und/oder der Relativposition der ersten und zweiten Koppelelemente (21, 22) im Zusammenhang stehenden Schall, Geräusche, mechanische Schwingungen oder deren Wirkung zueinander auf der Grundlage einer akustischen, optischen, elektrischen und/oder magnetischen Messgröße zu detektieren, welche von der Relativbewegung und/oder der Relativposition der ersten und zweiten Koppelelemente (21, 22) zueinander und/oder des ersten Koppelelements (21) relativ zu einer von Position und Bewegung des Koppelmoduls (20) mechanisch entkoppelten Stelle am zu Grunde liegenden Fahrzeug (1) abhängig ist.

2. Sensoranordnung (50) nach Anspruch 1,
welche mindestens ein Mikrofon (61) als erste Sensorkomponente aufweist, insbesondere mit Anordnung in unmittelbarer Nachbarschaft zum Koppelmodul (20), im oder am Koppelmodul (20).

3. Sensoranordnung (50) nach einem der vorangehenden Ansprüche,
welche eingerichtet ist, mit einer Relativbewegung und/oder einer Relativposition
(i) zwischen dem ersten Koppelelement (21) und einer von Position und Bewegung des Koppelmoduls (20) mechanisch entkoppelten Stelle am zu Grunde liegenden Fahrzeug (1) oder
(ii) zwischen den ersten und zweiten Koppelelementen (21, 22) im Zusammenhang stehende optische Eigenschaften und/oder Änderungen eines Lichtwegs zwischen dem ersten Koppelmodul (21) und der Stelle am zu Grunde liegenden Fahrzeug (1) bzw. zwischen den ersten und zweiten Koppelelementen (41, 42) zu detektieren.

4. Sensoranordnung (50) nach einem der vorangehenden Ansprüche, welche ausgebildet ist mit einer Lichtschranke (71) als erster Sensorkomponente, insbesondere
(i) an einer von Position und Bewegung des Koppelmoduls (20) mechanisch entkoppelten Stelle am zu Grunde liegenden Fahrzeug (1) oder
(ii) mitbeweglich mit dem zweiten Koppelelement (22), und/oder mit einem Geberelement (72) als zweiter Sensorkomponente mitbeweglich mit dem ersten Koppelelement (21) zur temporären Unterbrechung des Lichtwegs der Lichtschranke (71).

5. Sensoranordnung (50) nach einem der vorangehenden Ansprüche, welche eingerichtet ist, mit einer Relativbewegung und/oder einer Relativposition
(i) zwischen dem ersten Koppelelement (21) und einer von Position und Bewegung des Koppelmoduls (20) mechanisch entkoppelten Stelle am zu Grunde liegenden Fahrzeug (1) oder
(ii) zwischen den ersten und zweiten Koppelelementen (21, 22) im Zusammenhang stehende magnetische Eigenschaften und/oder Änderungen in einem Weg oder Raumbereichs zwischen dem ersten Koppelmodul (21) und der Stelle am zu Grunde liegenden Fahrzeug (1) bzw. zwischen den ersten und zweiten Koppelelementen (41, 42) zu detektieren.

6. Sensoranordnung (50) nach einem der vorangehenden Ansprüche, welche ausgebildet ist mit einem Magnetsensor (81) als erster Sensorkomponente, insbesondere
(i) an einer von Position und Bewegung des Koppelmoduls (20) mechanisch entkoppelten Stelle am zu Grunde liegenden Fahrzeug (1) oder
(ii) mitbeweglich mit dem zweiten Koppelelement (22), und/oder mit einem Geberelement (82), insbesondere einem Magneten, als zweiter Sensorkomponente mitbeweglich mit dem ersten Koppelelement (21) zur magnetischen Beeinflussung des Magnetsensors (80).

7. Betriebssteuerverfahren für den Antrieb (80) eines mit Muskelkraft und zusätzlich mit Motorkraft antreibbaren Fahrzeugs (1), insbesondere eines Elektrofahrrads, eBikes oder Pedelecs, bei welchem
- eine mit Muskelkraft antreibbare Antriebswelle (15) und eine maschinell antreibbare Abtriebswelle (16) über ein Koppelmodul (20) miteinander steuerbar koppelbar und entkoppelbar sind, um überlagernd Antriebsmomente auf die Abtriebswelle (16) zu übertragen,
- zum Koppeln und Entkoppeln der Antriebswelle (15) und der Abtriebswelle (16) ein drehfest mit der Antriebswelle (15) verbundenes erstes Koppelelement (21) des Koppelmoduls (20) und ein drehfest mit der Abtriebswelle (16) verbundenes zweites Koppelelement (22) des Koppelmoduls (20) über eine Relativbewegung zueinander miteinander in bzw. außer Eingriff bringbar sind,
- eine Relativbewegung und/oder eine Relativposition der ersten und zweiten Koppelelemente (21, 22) zueinander zur Bestimmung des Vorliegens oder Nichtvorliegens eines gekoppelten und/oder eines entkoppelten Zustands zwischen den ersten und zweiten Koppelelementen (21, 22) detektiert werden und
- ein maschineller Antrieb (3') in Abhängigkeit von der Detektion an die Abtriebswelle (16) gekoppelt oder von dieser entkoppelt wird,
wobei das Betriebssteuerverfahren
- mittels einer Sensoranordnung (50) nach einem der Ansprüche 1 bis 6 eine Relativbewegung und/oder eine Relativposition der ersten und zweiten Koppelelemente (21, 22) zueinander auf der Grundlage eines Werts einer mit einer akustischen, optischen, elektrischen und/oder magnetischen und mit der Relativbewegung und/oder der Relativposition der ersten und zweiten Koppelelemente (21, 22) im Zusammenhang stehenden Schall, Geräusche, mechanische Schwingungen oder deren Wirkung stehenden Messgröße detektiert.

8. Steuereinrichtung (10) für den Antrieb (80) eines mit Muskelkraft und zusätzlich mit Motorkraft antreibbaren Fahrzeugs (1), insbesondere eines Elektrofahrrads, eBikes oder Pedelecs, welche
- eingerichtet ist, ein Betriebssteuerverfahren nach Anspruch 7 auszuführen, und/oder
- eine Sensoranordnung (50) nach einem der Ansprüche 1 bis 6 oder eine Kommunikationsverbindung mit einer Sensoranordnung (50) nach einem der Ansprüche 1 bis 6 aufweist.

9. Mit Muskelkraft und zusätzlich mit Motorkraft antreibbares Fahrzeug (1), insbesondere Elektrofahrrad, eBike oder Pedelec, mit
- einem Antrieb (80),
- mindestens einem mit dem Antrieb (80) antreibbaren Rad (9-2),
- einer Steuereinrichtung (10) zur Steuerung des Antriebs (80), insbesondere nach Anspruch 8, sowie
- einer Sensoranordnung (50) nach einem der Ansprüche 1 bis 6.

## Claims

1. Sensor arrangement (50) for the drive (80) of a vehicle (1) which can be driven by muscle power and additionally by motor power, in particular an electric bicycle, ebike or pedelec, which sensor arrangement is designed
- to detect a relative movement and/or a relative position of a first coupling element (21) and of a second coupling element (22) of a coupling module (20) for coupling and uncoupling a drive shaft (15) and an output shaft (16) of the drive (80) in relation to one another,
- in order to in this way determine the presence or absence of a coupled and/or an uncoupled state between the first and second coupling elements (21, 22) and therefore of the drive shaft (15) and the output shaft (60) of the drive (80),
wherein the sensor arrangement (50) is designed to detect sound, noises and mechanical vibrations, which are related to the relative movement and/or the relative position of the first and second coupling elements (21, 22), or the effect thereof in relation to one another on the basis of an acoustic, optical, electrical and/or magnetic measurement variable which is dependent on the relative movement and/or the relative position of the first and second coupling elements (21, 22) in relation to one another and/or of the first coupling element (21) relative to a point on the underlying vehicle (1), which point is mechanically uncoupled from the position and movement of the coupling module (20).

2. Sensor arrangement (50) according to Claim 1, which has at least one microphone (61) as a first sensor component, in particular with an arrangement in the immediate vicinity of the coupling module (20), in or on the coupling module (20).

3. Sensor arrangement (50) according to either of the preceding claims,
which is designed to detect optical properties and/or changes in a light path between the first coupling module (21) and the point on the underlying vehicle (1) or between the first and second coupling elements (41, 42), which optical properties and/or changes are related to a relative movement and/or a relative position
(i) between the first coupling element (21) and a point on the underlying vehicle (1), which point is mechanically uncoupled from the position and movement of the coupling module (20), or
(ii) between the first and second coupling elements (21, 22) .

4. Sensor arrangement (50) according to one of the preceding claims,
which is designed with a light barrier (71) as a first sensor component, in particular
(i) at a point on the underlying vehicle (1), which point is mechanically uncoupled from the position and movement of the coupling module (20) or
(ii) moving together with the second coupling element (22), and/or
with a transmitter element (72) as a second sensor component moving together with the first coupling element (21) for temporarily interrupting the light path of the light barrier (71).

5. Sensor arrangement (50) according to one of the preceding claims,
which is designed to detect magnetic properties and/or changes in a path or spatial region between the first coupling module (21) and the point on the underlying vehicle (1) or between the first and second coupling elements (41, 42), which magnetic properties and/or changes are related to a relative movement and/or a relative position
(i) between the first coupling element (21) and a point on the underlying vehicle (1), which point is mechanically uncoupled from the position and movement of the coupling module (20), or
(ii) between the first and second coupling elements (21, 22) .

6. Sensor arrangement (50) according to one of the preceding claims,
which is designed with a magnetic sensor (81) as a first sensor component, in particular
(i) at a point on the underlying vehicle (1), which point is mechanically uncoupled from the position and movement of the coupling module (20), or
(ii) moving together with the second coupling element (22), and/or
with a transmitter element (82) in particular a magnet, as a second sensor component moving together with the first coupling element (21) for magnetically influencing the magnet sensor (80).

7. Operating control method for the drive (80) of a vehicle (1) which can be driven by muscle power and additionally by motor power, in particular an electric bicycle, ebike or pedelec, in which operating control method
- a drive shaft (15) which can be driven by muscle power and an output shaft (16) which can be driven by machine can be coupled and uncoupled to/from one another in a controllable manner by means of a coupling module (20) in order to transmit drive torques to the output shaft (16) in a superimposing manner,
- a first coupling element (21) of the coupling module (20), which first coupling element is connected in a rotationally fixed manner to the drive shaft (15), and a second coupling element (22) of the coupling module (20), which second coupling element is connected in a rotationally fixed manner to the output shaft (16), can be brought into and out of engagement with one another by means of a relative movement in relation to one another for the purpose of coupling and uncoupling the drive shaft (15) and the output shaft (16),
- a relative movement and/or a relative position of the first and second coupling elements (21, 22) in relation to one another is detected for determining the presence or absence of a coupled and/or an uncoupled state between the first and second coupling elements (21, 22), and
- a mechanical drive (3') is coupled to the output shaft (16) or uncoupled from said output shaft depending on the detection,
wherein the operating control method
- detects, by means of a sensor arrangement (50) according to one of Claims 1 to 6, a relative movement and/or a relative position of the first and second coupling elements (21, 22) in relation to one another on the basis of a value of a with an acoustic, optical, electrical and/or magnetic, and sound, noises and mechanical vibrations which are related to the relative movement and/or the relative position of the first and second coupling elements (21, 22), or the effects thereof standing measurement variable.

8. Control device (10) for the drive (80) of a vehicle (1) which can be driven by muscle power and additionally by motor power, in particular an electric bicycle, an ebike or pedelec, which control device
- is designed to execute an operating control method according to Claim 7, and/or
- has a sensor arrangement (50) according to one of Claims 1 to 6 or a communications link to a sensor arrangement (50) according to one of Claims 1 to 6.

9. Vehicle (1) which can be driven by muscle power and additionally by motor power, in particular electric bicycle, ebike or pedelec, comprising
- a drive (80),
- at least one wheel (9-2) which can be driven by the drive (80),
- a control device (10) for controlling the drive (80), in particular according to Claim 8, and also
- a sensor arrangement (50) according to one of Claims 1 to 6.

## Revendications

1. Dispositif capteur (50) pour l'entraînement (80) d'un véhicule (1) qui peut être entraîné par la force musculaire ainsi que par la force d'un moteur, en particulier une bicyclette électrique, un ebike ou un pedelec, qui est conçu
- pour détecter un mouvement relatif et/ou une position relative d'un premier élément d'accouplement (21) et d'un second élément d'accouplement (22) d'un module d'accouplement (20) pour accoupler et désaccoupler l'un par rapport à l'autre un arbre d'entrée (15) et un arbre de sortie (16) de l'entraînement (80),
- afin de permettre ainsi une détermination de la présence ou de l'absence d'un état accouplé et/ou désaccouplé entre les premier et second éléments d'accouplement (21, 22) et par conséquent entre l'arbre d'entrée (15) et l'arbre de sortie (60) de l'entraînement (80),
dans lequel le dispositif capteur (50)
est conçu pour détecter, à partir du mouvement relatif et/ou de la position relative des premier et second éléments d'accouplement (21, 22), le son, le bruit, les vibrations mécaniques ou leurs effets mutuellement liés sur la base d'une grandeur de mesure acoustique, optique, électrique et/ou magnétique qui dépend du mouvement relatif et/ou de la position relative l'un par rapport à l'autre des premier et second éléments d'accouplement (21, 22) et/ou du premier élément d'accouplement (21) par rapport à un emplacement, sur le véhicule concerné (1), qui est mécaniquement désaccouplé de la position et du mouvement du module d'accouplement (20).

2. Dispositif capteur (50) selon la revendication 1, qui comporte au moins un microphone (61) en tant que premier composant de capteur, agencé en particulier à proximité immédiate du module d'accouplement (20), dans ou sur le module d'accouplement (20).

3. Dispositif de capteur (50) selon l'une des revendications précédentes, qui est conçu pour détecter, à partir d'un mouvement relatif et/ou d'une position relative,
(i) entre le premier élément d'accouplement (21) et un emplacement, sur le véhicule concerné (1), qui est mécaniquement désaccouplé de la position et du mouvement du module d'accouplement (20), ou
(ii) entre les premier et second éléments d'accouplement (21, 22),
des propriétés optiques et/ou des modifications mutuellement liées du trajet optique entre le premier module d'accouplement (21) et l'emplacement, sur le véhicule concerné (1), ou entre les premier et second éléments d'accouplement (41, 42).

4. Dispositif de capteur (50) selon l'une des revendications précédentes, qui est réalisé de manière à comporter une barrière lumineuse (71) en tant que premier composant de capteur, en particulier,
(i) en un emplacement, sur le véhicule concerné (1), qui est mécaniquement désaccouplé de la position et du mouvement du module d'accouplement (20), ou
(ii) mobile avec le second élément d'accouplement (22), et/ou avec un élément transducteur (72) en tant que second composant de capteur mobile avec le premier élément d'accouplement (21) pour interrompre temporairement le chemin optique de la barrière lumineuse (71) .

5. Dispositif de capteur (50) selon l'une des revendications précédentes, qui est conçu pour détecter, à partir d'un mouvement relatif et/ou d'une position relative
(i) entre le premier élément d'accouplement (21) et un emplacement, sur le véhicule concerné (1), qui est mécaniquement désaccouplé de la position et du mouvement du module d'accouplement (20), ou
(ii) entre les premier et second éléments d'accouplement (21, 22),
des propriétés magnétiques et/ou des modifications mutuellement liées se produisant dans un trajet ou d'une zone spatiale entre le premier module d'accouplement (21) et l'emplacement, sur le véhicule concerné (1), ou entre les premier et second éléments d'accouplement (41, 42).

6. Dispositif de capteur (50) selon l'une des revendications précédentes, qui est réalisé de manière à comporter un capteur magnétique (81) en tant que premier composant de capteur, en particulier,
(i) en un emplacement, sur le véhicule concerné (1), qui est mécaniquement désaccouplé de la position et du mouvement du module d'accouplement (20), ou
(ii) mobile avec le second élément d'accouplement (22), et/ou avec un élément transducteur (82), en particulier un aimant, en tant que second composant de capteur mobile avec le premier élément d'accouplement (21) pour exercer une influence magnétique sur le capteur magnétique (80).

7. Procédé de commande de fonctionnement pour l'entraînement (80) d'un véhicule (1) qui peut être entraîné par la force musculaire ainsi que par la force d'un moteur, en particulier une bicyclette électrique, un ebike ou un pedelec, dans lequel
- un arbre d'entrée (15), qui peut être entraîné par la force musculaire, et un arbre de sortie (16), qui peut être entraîné par machine, peuvent être accouplés l'un à l'autre et désaccouplés de manière commandée par l'intermédiaire d'un module d'accouplement (20) afin de transmettre de manière superposée des couples d'entraînement à l'arbre de sortie (16),
- pour l'accouplement et le désaccouplement de l'arbre d'entrée (15) et de l'arbre de sortie (16), un premier élément d'accouplement (21) du module d'accouplement (20), qui est relié de manière fixe en rotation à l'arbre d'entrée (15), et un second élément d'accouplement (22) du module d'accouplement (20), qui est relié de manière fixe en rotation à l'arbre de sortie (16), peuvent être mis en prise et hors de prise l'un avec l'autre par l'intermédiaire d'un mouvement relatif l'un par rapport à l'autre,
- un mouvement relatif et/ou une position relative l'un par rapport à l'autre des premier et second éléments d'accouplement (21, 22) sont détectés pour déterminer la présence ou l'absence d'un état accouplé et/ou désaccouplé entre les premier et second éléments d'accouplement (21, 22), et
- un entraînement mécanique (3') est accouplé à l'arbre de sortie (16) ou en est désaccouplé en fonction de la détection,
dans lequel la procédé de commande de fonctionnement
- détecte, au moyen d'un dispositif de capteur (50) selon l'une des revendications 1 à 6, un mouvement relatif et/ou une position relative l'un par rapport à l'autre des premier et second éléments d'accouplement (21, 22) sur la base d'une valeur d'un avec un acoustique, optique, électrique et/ou magnétique, et un son, un bruit, une vibration mécanique liés au mouvement relatif et/ou à la position relative des premier et second éléments d'accouplement (21, 22) ou à leur effet une grandeur de mesure stationnaire.

8. Dispositif de commande (10) pour l'entraînement (80) d'un véhicule (1) qui peut être entraîné par la force musculaire ainsi que par la force d'un moteur, en particulier une bicyclette électrique, un ebike ou un pedelec,
- qui est conçu pour mettre en œuvre un procédé de commande de fonctionnement selon la revendication 7, et/ou
- qui comporte un dispositif de capteur (50) selon l'une des revendications 1 à 6 ou une liaison de communication avec un dispositif de capteur (50) selon l'une des revendications 1 à 6.

9. Véhicule (1) pouvant être entraîné par la force musculaire ainsi que par la force d'un moteur, en particulier une bicyclette électrique, un ebike ou un pedelec, comprenant
- un entraînement (80),
- au moins une roue (9-2) pouvant être entraînée par l'entraînement (80),
- un dispositif de commande (10) destiné à commander l'entraînement (80), en particulier selon la revendication 8, et
- un dispositif de capteur (50) selon l'une des revendications 1 à 6.
